# EUROPEAN PATENT SPECIFICATION

(11) **EP 0 995 193 B1**
(45) Date of publication and mention of the grant of the patent: **05.03.2003**
(21) Application number: 98934101.1
(22) Date of filing: 15.07.1998
(51) Int. Cl.: G11B 7/26

(54) **SEMI-MANUFACTURED STAMPER AND METHOD OF MANUFACTURING THE SAME**
HALBFERTIGSTEMPEL UND VERFAHREN ZU DESSEN HERSTELLUNG
MATRICE DE PRESSAGE ET PROCEDE DE PRODUCTION DE CETTE MATRICE

(30) Priority: 16.07.1997 SE 9702734; 25.09.1997 SE 9703480
(43) Date of publication of application: 26.04.2000
(73) Proprietor: OTB Group B.V., 5652 AM Eindhoven (NL)
(72) Inventor: BILLMAN, Ake, S-177 61 Järfälla (SE); ÖHMAN, Ove, S-755 91 Uppsala (SE)
(74) Representative: Prins, Adrianus Willem
(86) International application number: SE9801387
(87) International publication number: WO99004393

(56) References cited:
- EP-A- 0 284 387
- EP-A- 0 429 346
- EP-A- 0 446 967
- EP-A- 0 495 281
- EP-A- 0 553 013
- EP-A- 0 667 608
- EP-A- 0 694 916
- DE-A- 19 612 329
- US-A- 5 328 816
- PATENT ABSTRACTS OF JAPAN vol. 018, no. 173 (M-1581), 24 March 1994 & JP 05 337899 A (RICOH CO LTD), 21 December 1993
- PATENT ABSTRACTS OF JAPAN vol. 016, no. 003 (P-1294), 7 January 1992 & JP 03 225646 A (NEC CORP), 4 October 1991
- PATENT ABSTRACTS OF JAPAN vol. 014, no. 486 (M-1038), 23 October 1990 & JP 02 196641 A (FUJI PHOTO FILM CO LTD), 3 August 1990

## Description

### Technical Field of the Invention

The present invention relates to methods of providing a semi-manufactured optical disc stamper. The invention also relates to such a stamper in combination with a protective package. The invention also relates to a process for manufacturing an optical disc by means of a structured stamper of the invention.

### Description of Related Art

Optical Discs, such as compact discs (CD), digital video discs or digital versatile discs (DVD) and optically readable memories such as CD-ROM's are manufactured with the use of an injection moulding machine.

The injection moulding machine comprises an injection moulding tool which determines the shape of the disc to be manufactured. Such a tool comprises a stamper having a pattern of protrusions to be imprinted on the disc. Hence the pattern of the stamper is a model for information to be imprinted in the disc to be manufactured.

Hence, a manufacturer of optical discs having an amount of information-to-be-replicated, such as for example a music recording or computer data, needs to obtain a stamper with a pattern corresponding to that information.

According to prior art a stamper is manufactured in the following way: Firstly, a master having a pattern corresponding to the pattern to be on the Optical Discs is manufactured. Secondly the master is used for producing the stamper, such that the pattern of the stamper is the mirror image of the pattern of the master.

Each of the two steps "manufacturing a master", and "manufacturing a stamper with the use of the master" in itself comprises a number of steps. For example the manufacture of a master, according to prior art, involves (1) coating a smooth glass plate with a photosensitive material, and thereafter (2) curing the photoresist before (3) radiating the surface of the coated glass plate with a modulated laser to record a spiral track of information in the photoresist material. In this last mentioned step the areas designated to become pits are exposed to laser light.

Thereafter the master glass plate is subjected to an etching process (4) leading to the illuminated areas, i.e. the pits-to-be, being etched out such that a pattern of pits is generated. In other words the surface of the master glass plate is made structured. After a drying process (5) the patterned, i.e. structured, surface of the plate is metallized (6), e.g. by vacuum deposition or sputtering of a thin conductive layer. The resulting multilayer construction (having a glass layer, a structured photoresist layer and a thin structured conductive layer) constitutes the master.

The step of generating a stamper with the use of the master according to prior art involves (1) deposition of nickel by electroplating, and (2) removal of the resulting nickel plate from the master. This removal step commonly results in a nickel plate having traces of photoresist and silver on the patterned surface, due to strong adhesion between the nickel and the conductive layer of the master. Hence the information carrying part of the master is destroyed in the process of making the stamper.

The prior art process of making a stamper also involves a cleaning process (3) for removing any traces of photoresist and/or silver from the patterned surface of the nickel plate. Thereafter the opposite side of the nickel plate is commonly polished, a centre opening is punched out and an outer diameter punch is used to make the plate circular. At that stage a stamper suitable for use for mass production of information carrying optical discs has been obtained. Sometimes, however, an error occurs during one of the steps causing the obtained master and/or stamper to have substandard quality. Such a master or stamper will have to be rejected.

Hence, a manufacturer of optical discs needs to perform a long process starting with a master, providing a structure on the master, and then creating a structured stamper with use of the master before the replication of optical discs can be initiated. This method requires a large amount of complex machinery to be installed at the premises of the manufacturer of optical discs - a machinery which also has to be handled by skilled personnel. Since the process consists of a large number of steps, it is also time consuming.

As an alternative to carrying out this long and complicated process, some manufacturers of optical discs delivers the information-to-be-replicated to a third party. The third party then manufactures a structured stamper in accordance with the above described method and delivers it to the manufacturer of optical discs. This simplifies the procedure for the manufacturer of optical discs, but the total complexity of the method increases, and the time required for obtaining the information carrying stamper is relatively long.

JP-A-3 225 646 and EP-A-0 495 281 disclose stampers having information pits and thus lacking unstructured portions on the guide tracks.

EP-A-0 446 967 neither discloses unstructured portions for the application of a photosensitive layer.

### Summary

A problem to which the present invention is directed is to enable a manufacturer of optical discs to reduce the mean time duration from reception of information-to-be-replicated, such as for example a music recording or computer data, until successful replication of optical discs recorded with that information.

Another problem to which the present invention is directed is to simplify the manufacture of a structured stamper. More precisely, the problem is to enable a manufacturer of optical discs to obtain a stamper provided with a selectable structure by means of an uncomplicated and cost-effective method.

Yet another problem to be addressed by the invention is to enable a Manufacturer of Optical Discs to provide a structure on a blank stamper by means of an uncomplicated and cost-effective method, and without requiring complex machinery.

These problems are solved, in accordance with an embodiment of the invention, by a method of providing a semi-manufactured stamper, the method comprising the steps of:
a) obtaining a substantially disc-shaped member having a first surface and a second surface forming a back surface of the semi-manufactured stamper; said first surface being provided with a guide track for indicating structurable surface portions of said member; said structurable surface portions being flat and substantially unstructured;
b) applying a layer sensitive to irradiation on said first surface such that an unexposed and exposable semi-manufactured stamper is provided;
c) enclosing the unexposed semi-manufactured stamper in a protective package such that the sensitive film is maintained substantially unexposed; and
d) treating the semi-manufactured stamper, before performing step c), said treatment including:
   d1) treating said second surface of the semi-manufactured stamper such that a mean surface deviation value below 2 micrometer is obtained.

Such a blank stamper means can be manufactured without having access to the in-formation-to-be-replicated. In other words, the blank stamper means can be manufactured without consideration to the pattern or structure to be formed in the Optical-Discs-to-be.

An inspection of the unexposed semi-manufactured stamper is carried out after applying and drying the sensitive layer. Any semi-manufactured, blank, stampers which are of inferior quality prior to the step of enclosing it in the package, will be rejected. The rejected semi-manufactured stampers will not be packed. Only high-quality blank stampers, which pass the inspection will be enclosed in the package.

The above described method provides the invention with the advantage of enabling an uncomplicated manufacture of a structured stamper.

A blank stamper of the invention is transformable into a structured stamper by means of an advantageously uncomplicated method, thereby enabling a manufacturer of optical discs to obtain a stamper provided with a selectable structure by means of a quick and cost-effective method.

This means that a number of process steps needed for obtaining a structured stamper can be performed in advance. Once the information or structure to be replicated has been established, the number of steps needed for obtaining a structured stamper is thereby reduced. Hence, the time required for obtaining a structured stamper is significantly reduced.

Furthermore the yield is improved, i.e. the rejection rate is decreased, since a number of critical manufacturing steps are performed prior to structuring the stamper means. Items that are rejected in the manufacturing steps before structuring will never be delivered to the Manufacturer of Optical Discs, and therefore does not affect the rejection rate as experienced by the Manufacturer of Optical Discs.

Moreover, the guide track provided on the blank stamper reduces the rejection rate in the structuring step by eliminating, or reducing, erroneous positioning of the information structure on the stamper. The guide track also enables use of a less complex, and therefore less costly, mastering equipment, while enabling the meeting of narrow tolerance specifications in the positioning of information. Data, i.e. a pattern of protrusions or indentations, on an Optical Disc needs to be provided in a predetermined manner along a substantially spiral line from one perimeter of the disc towards another perimeter of the disc. In order to maximize the information storage capacity and in order to enable accurate retrieval of the stored information, the spiral line of information needs to be provided within a narrow tolerance zone.

Since the manufacturer-of-optical-discs starts out with a high-quality semi-manufactured stamper, which is already adapted for fitting into his injection moulding machine, the number of steps to be performed by the manufacturer-of-optical-discs is advantageously low. This leads to a high yield in that process.

Hence, the process of manufacturing an optical disc is simplified and becomes less costly since, according to an embodiment of the invention, the process for manufacturing an optical disc comprises the steps set forth in claim 15.

The invention also relates to a semi-manufactured stamper in combination with a protective package, as defined in claims 16 - 18.

### Brief Description of the Drawings

Figure 1A is a top view of a blank stamper according to a first embodiment of the invention.

Figure 1B is a top view of the stamper according to Fig 1A after structuring.

Figure 2A is a flow chart illustrating a process of obtaining a blank stamper according to Figure 1A.

Figure 2B is a flow chart illustrating a process of obtaining a structured stamper according to Figure 1B.

Figure 3 is a schematic side view of a part of a plate to be used for manufacturing a stamper.

Figure 4 is a schematic sectional side view of a part of a work piece for a blank stamper means according an embodiment of the invention.

Figure 5 is a schematic sectional side view of the work piece shown in Figure 4, additionally including a layer sensitive to irradiation.

Figure 6 is a schematic sectional side view of the work piece means according to Fig. 5, after the creation of a guide pattern in the exposure sensitive layer.

Figure 7 is a schematic sectional side view of a blank stamper obtained from the work piece shown in Figure 6 by subjecting it to etching.

Figure 8 is a schematic sectional side view of the blank stamper shown in Figure 7, after provision of an exposure sensitive material.

Figure 9 is a sectional top view of a package 300 for a plurality of blank stampers 1.

Figure 10 is a sectional side view of the package shown in Fig 9.

Figure 11 is a schematic sectional side view of a the blank stamper shown in Figure 8, after exposing a pattern of information into the exposure sensitive material.

Figure 12 is a sectional side view of a the blank stamper shown in Figure 11, after removal of unexposed material.

Figure 13 is a sectional side view of a the blank stamper shown in Figure 12, after etching

Figure 14 is a schematic sectional side view of a part of a stamper workpiece according to a further embodiment of the invention.

Figure 15 is a schematic sectional side view of a blank stamper obtained from the work piece shown in Figure 14.

Figure 16 is a schematic sectional side view of the blank stamper shown in Figure 15, after provision of an exposure sensitive material.

Figure 17 is a sectional side view of a portion of a structured stamper 250 obtained from a blank stamper 1 as shown in Figs 15 or 16.

Figure 18A is a flow chart illustrating a second embodiment of a process of obtaining a blank stamper as shown in Figure 1A.

Figure 19 is a schematic sectional side view of a work piece including a layer sensitive to irradiation.

Figure 20 is a schematic sectional side view of the work piece according to Fig. 19, after the creation of a guide pattern in the exposure sensitive layer.

Figure 21 is a schematic sectional side view of the work piece according to Fig. 20, after provision of a guide track by ion etching.

Figure 22 is a schematic sectional side view of the work piece according to Fig. 21, after removal of the exposure sensitive layer.

Figure 23 is a schematic sectional side view of the work piece according to Fig. 22, after provision of an exposure sensitive mask film

Figure 24 is a schematic sectional side view of the work piece according to Fig. 23, after exposing and curing the mask film in a first manner.

Figure 25 is a schematic sectional side view of the structured stamper according to Fig. 24, after ion etching so as to achieve an information pattern in the stamper means

Figure 26 is a schematic sectional side view of the work piece according to Fig. 23, after exposing and curing the mask film in a second manner.

Figure 27 is a schematic sectional side view of the work piece according to Fig. 26, after ion etching so as to achieve an information pattern in the stamper means when cured mask film remains after etching.

Figure 28 is a schematic sectional side view of the structured stamper according to Fig. 27, after removing any remains of the mask film.

Figure 29 is a top view of a part of the structured stamper according to Fig. 28, as seen in the direction of arrow C in Fig 28.

### Detailed Description of Embodiments

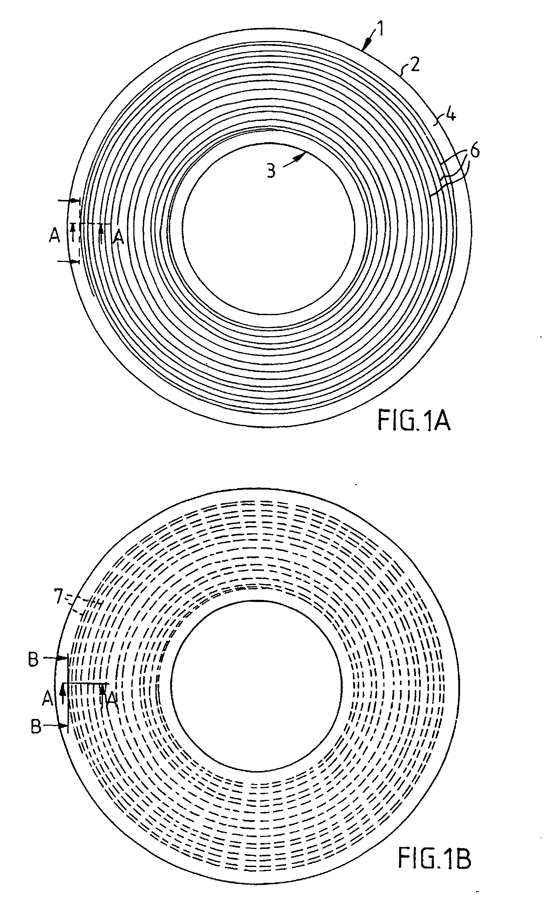

Figure 1A is a schematic top view of a blank stamper 1 according to a first embodiment of the invention. The blank stamper 1 comprises a substantially disc-shaped plate member having an outer perimeter 2 and an inner perimeter 3. The inner perimeter forms an opening in the plate. The blank stamper 1 has a first surface 4. The first surface 4 is provided with a guide track 6.

Figure 1B is a schematic top view of the stamper according to figure after structuring. The structured stamper 5 is provided with a plurality of protrusions or indentations 7 (schematically indicated with dots on the surface of the stamper in Fig. 1B) on the surface 4 to be facing a cavity in an injection moulding machine. These protrusions/indentations are positioned in a predetermined positional relation to the guide track 6.

The purpose of the opening formed by inner perimeter 3 is to enable easy installation of the structured stamper 5 into an injection moulding machine having an injection inlet for molten resin in the center of the stamper.

### An embodiment of a method of obtaining a blank stamper means

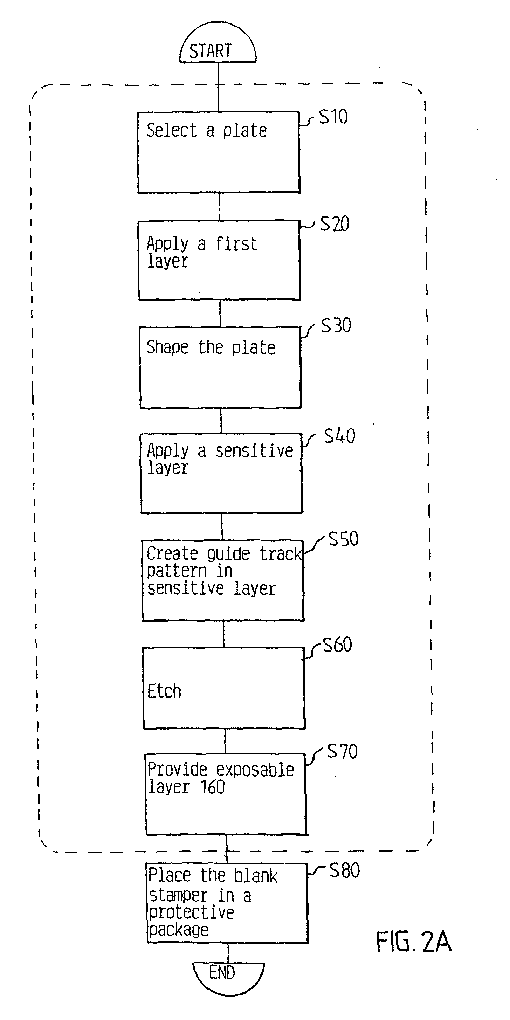

Figure 2A is a flow chart illustrating a process of obtaining a blank stamper having a guide track as shown in Figure 1A.

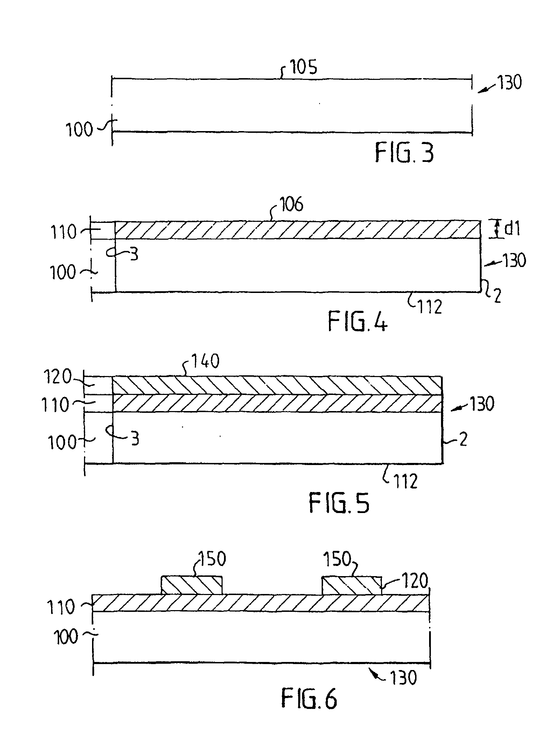

In a first step S10 a workpiece 130 is selected (Fig 3). The workpiece 130 is to be worked into a blank stamper 1.

A suitable workpiece comprises a plate 100 made from a material having a composition suitable for repetitive heat cycling and having a degree of hardness such that wear is minimized when used as a stamper for producing Optical Discs. The plate 100 is preferably a metal plate.

The plate 100 (see Figure 3) is, according to an embodiment, a plate of nickel having a flat smooth surface 105. The plate 100 is, according to an embodiment, obtained by electroplating. Thereby an advantageously smooth surface 105 with a substantially glassy finish is provided. Alternatively a plate is treated such that a sufficiently smooth surface 105 is provided.

In a second process step S20 a first layer 110 (see Figure 4) is provided on the surface 105 of the plate 100. The layer 110 is herein referenced to as a pattern layer, since a pattern is to be provided in the layer 110, as described below. According to an embodiment of the invention the first layer 110 is provided by Physical Vapour Deposition, PVD. According to a preferred embodiment this is achieved by evaporation. According to another embodiment sputtering is used.

The layer 110 is made of a material having a composition different from that of the plate 100 such that the layer 110 and the plate 100 have different sensitivity to a selected etchant. The properties of the layer 110 and the plate 100 are selected such that the layer 110 is etched well whereas the plate 100 is substantially insensitive to the selected etchant.

According to one embodiment the plate 100 comprises nickel, and the first layer 110 consists substantially of titanium nitride. Titanium nitride has the advantageous properties of being depositable by evaporation to a controllable layer thickness, and it stands temperature cycling very well plus it provides a durable surface. The temperature cycling endurance is an important aspect for a stamper since injection moulding involves repetitive heating and cooling.

The first layer 110 can alternatively comprise silicon carbide, silicon nitride or wolfram carbide.

According to an embodiment of the invention the pattern layer 110 is made with a certain layer thickness d1. The thickness d1 corresponds to the desired height of protrusions 7 in the stamper 5 to be achieved. This height d1 should correspond to a depth d2 of the pits of the optical disc to be produced, and the configuration of the protrusions 7 should correspond to the configuration of the individual pits-to-be-obtained. The depth d2 of the pits in an optical disc manufactured with the stamper 5 should be about a quarter of the wave length of the laser used for reading the information from the optical disc.

According to one embodiment of the invention the layer thickness d1 is in the range 0.050 to 0.150 micrometer.

According a preferred embodiment a blank stamper has a pattern layer with a thickness in the range 0.100 to 0.130 micrometer, but preferably thinner than 0.125 micrometer. Such a blank stamper is suitable for transformation into a structured stamper for production of standard CD's.

According to another embodiment a blank stamper has a pattern layer with a thickness in the range 0.090 to 0.110 micrometer, or preferably 0.102 micrometer. Such a blank stamper is suitable for transformation into a structured stamper for production of optical video discs or DVD's.

According to yet another embodiment a blank stamper has a pattern layer 110 with a thickness in the range 0.062 to 0.082 micrometer, or preferably 0.072 micrometer. Such a blank stamper is suitable when the optical-disc-to-be-manufactured is to be used in a CD player having a laser working in the blue light wave length region.

The workpiece 130 is shaped and worked such that its geometry and physical properties are suitable for mounting in an injection moulding machine, as illustrated by step S30 in Fig. 2A. This step is an adaptation of the workpiece for the purpose of reducing the number of process steps to be performed by the end user of the stamper. The order of execution of steps S20 and S30 may be reversed. In fact, step S30 may be performed at any stage after step S10 but before placing the semi-manufactured stamper in a package for delivery (step S80 below).

According to a preferred embodiment of step S30 the workpiece is punched so as to provide a substantially circular outer perimeter 2 and an inner circular perimeter 3 of a smaller diameter (Fig. 1A). The punching is performed such that deformation of the workpiece is avoided. Machines for performing such punching are known to the person skilled in the art. The inner diameter is preferably between 25 mm and 38 mm, and the outer diameter is preferably between 125 mm and 150 mm.

The resulting workpiece (Fig. 4) has a surface 106, an outer perimeter 2, an inner perimeter 3 and a back surface 112. According to a preferred embodiment the workpiece is a substantially stressfree, disc-shaped plate having a thickness of in the range 250 to 350 micrometer, preferably 300 micrometer. The surface 106 is structurable, but substantially unstructured.

The quality of the surface 112 is of importance since the stamper-to-be must be substantially flat during the injecting moulding procedure. Due to the relatively small thickness of the stamper, the avoidance of surface irregularities of the back surface 112 are of great importance, since large surface irregularities may cause bulging of the stamper when mounted against a flat plane surface in the injection moulding machine and the high pressure in the moulding cavity during moulding presses the stamper against the flat plane machine surface. Such bulging would, in turn, lead to inferior quality of the resulting moulded product.

For these reasons the step S30 also includes treatment of the surface 112 such that surface irregularities are minimized. This treatment includes polishing according to one version of the invention.

Surface irregularities are measured in standardized manners, such as according to DIN 4768 defining a mean surface deviation R_{z}. The mean surface deviation R_{z} provides a measure of the average deviation in a direction perpendicular to the plane of the surface. According to an embodiment the surface 112 is treated to obtain a mean surface deviation value R_{z} below 2,0 micrometer, since inferior quality of replicated optical disks is obtained when the mean surface deviation value R_{z} exceeds 2,0 micrometer. According to a preferred embodiment the mean surface deviation R_{z} of surface 112 after treatment is less than 1,0 micrometer.

The maximum surface deviation Rₘₐₓ is measured according to DIN 4768, and according to one embodiment the maximum surface deviation value Rₘₐₓ is below 3,0 micrometer for the treated surface 112. According to a preferred embodiment Rₘₐₓ has a value below 1,3 micrometer.

The arithmetic average deviation Rₐ is the arithmetic mean value of all distances from the surface profile to a mean surface line, each distance being measured perpendicularly to the mean surface line. The arithmetic average deviation Rₐ is obtained by evaluation of the surface 112 along an evaluation line. According to an embodiment of the invention the back surface is treated so as to obtain an arithmetic average surface deviation value Rₐ below 0,3 micrometer or at least below 0,5 micrometer. According to a preferred embodiment Rₐ has a value below 0.1 micrometer for the treated surface 112.

Since it is an object of the present invention to simplify the procedure for the Manufacturer of Optical Discs, the treatment of the back surface 112 should preferably be executed on the blank stamper before structuring it. Furthermore, it to be noted that every step in the treatment of a stamper has a rejection ratio, i.e. statistically a certain portion of the articles will fail the quality requirements after the treatment step. For these reasons it is advantageous to perform the treatment of the back surface on the blank stamper 1 before structuring it.

In a step S40 a layer 120, sensitive to irradiation is applied on the first layer 110 (see Figure 5). The sensitive layer 120 is a mask film to be exposed and developed into a suitable mask pattern. The sensitive layer 120 is spin coated onto the surface 106 to a substantially even thickness. The term "sensitive layer" used in this text comprises sensitivity to electron beams as well as sensitivity to laser exposure. The sensitive layer is, in one version of the invention, a photosensitive resist film. The irradiation sensitivity of layer 120 is not limited to the above examples, but can be sensitivity to beams or rays of other irradiation such as for example X-rays or ultraviolet rays.

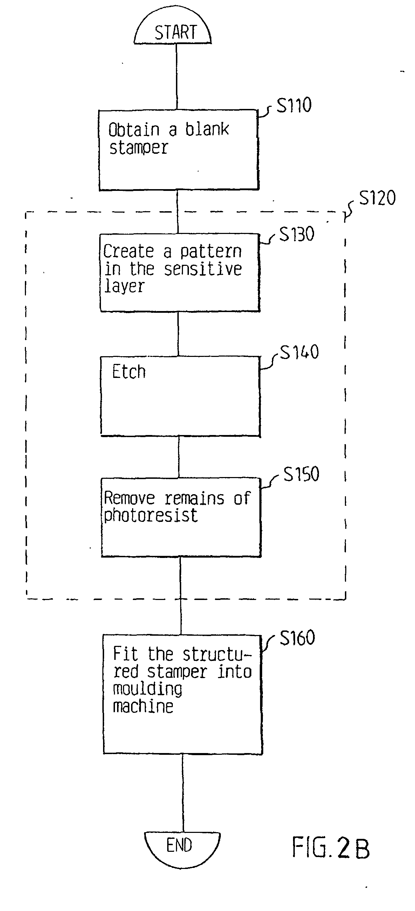

The sensitive layer may be sensitive in a positive manner or in a negative manner. When a positively sensitive layer is used the exposed areas are removed by the development process, described with reference to Fig. 2B below. Conversely, when a negatively sensitive layer is used the unexposed areas are removed by the development process.

The workpiece resulting from step S40 ( Fig. 5) has a front surface 140, an outer edge and a back surface 112, the front surface 140 being structurable, but substantially unstructured.

In a subsequent step S50 the sensitive layer 120 is exposed to provide the pattern of a guide track. After development the resulting workpiece has a protruding spiral portion of cured remains of the sensitive layer 120 forming a mask 150, as shown in Fig. 6.

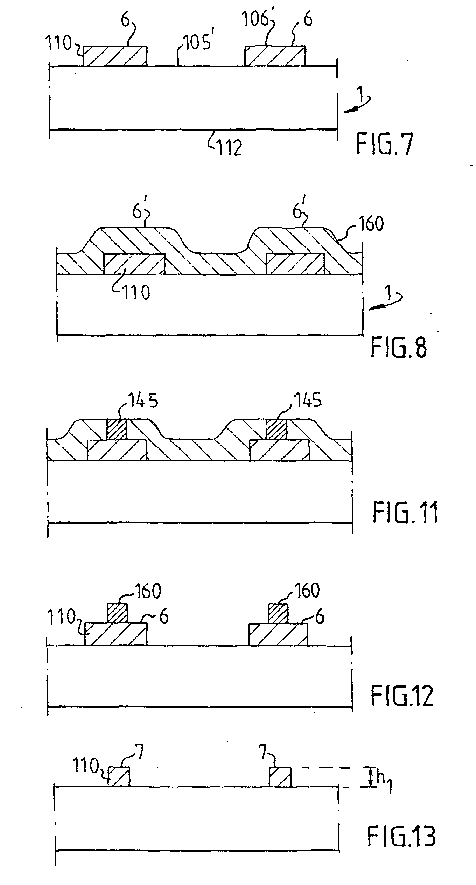

Using the mask 150 the workpiece is etched (Step S60) to obtain the workpiece shown in Fig. 7, having a guide track 6 formed by the remaining parts of the pattern layer 110. Hence, Fig. 7 shows a cross-section taken along line A-A of the blank stamper embodiment in Fig. 1A. The guide track 6 is formed of an elongated protruding part of the structurable layer 110 having a surface area 106'. The surface area 106' is a portion of the surface 106 of the structurable layer 110.

At this stage the workpiece is preferably prepared, shaped and adapted such that the only remaining processing, for obtaining a structured stamper ready for installation in an injection moulding machine, is to provide the information structure in the pattern layer 110.

According to another embodiment the blank stamper is additionally provided with an unexposed layer of an exposure sensitive layer 160, as shown in Fig. 8. The exposure sensitive layer 160 can be provided by spin coating a liquid onto the blank stamper shown in Fig. 7 and curing it (step S70).

The cured layer 160 is unexposed and therefore ready to be radiated e.g. with a modulated laser to record a spiral track of information.

### A Second Embodiment of a Process of Obtaining a Blank Stamper

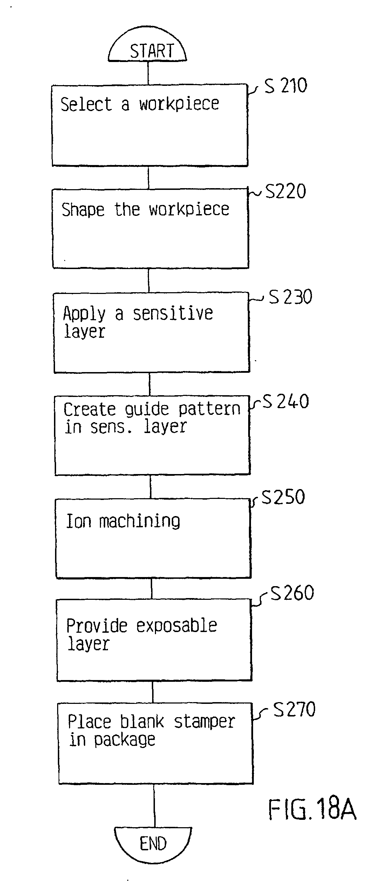

Figure 18A is a flow chart illustrating a second embodiment of a process of obtaining a blank stamper having a guide track as shown in Figure 1A. According to the second embodiment, a stamper workpiece 130 is selected (step S210). The workpiece is to be worked into a blank stamper 1.

A suitable workpiece comprises a plate 100 made from a material having a composition suitable for repetitive heat cycling and having a degree of hardness such that wear is minimized when used as a stamper for producing Optical Discs (see Figure 3).

The plate 100 may, according to this embodiment be a plate of nickel or of any suitable material having a flat smooth surface 105. The surface of the plate 100 is formed such that an advantageously smooth surface 105 with a substantially glassy finish is provided. Alternatively a plate is treated such that a sufficiently smooth surface 105 is provided.

The temperature cycling endurance is an important aspect for a stamper since injection moulding involves repetitive heating and cooling.

The plate may also comprise a material such as e.g. silicon carbide, silicon nitride or wolfram carbide for a surface. The plate would then be in the form of a laminate. This plate, either being a solid piece or a laminate would however not be used in the same way as in the first embodiment.

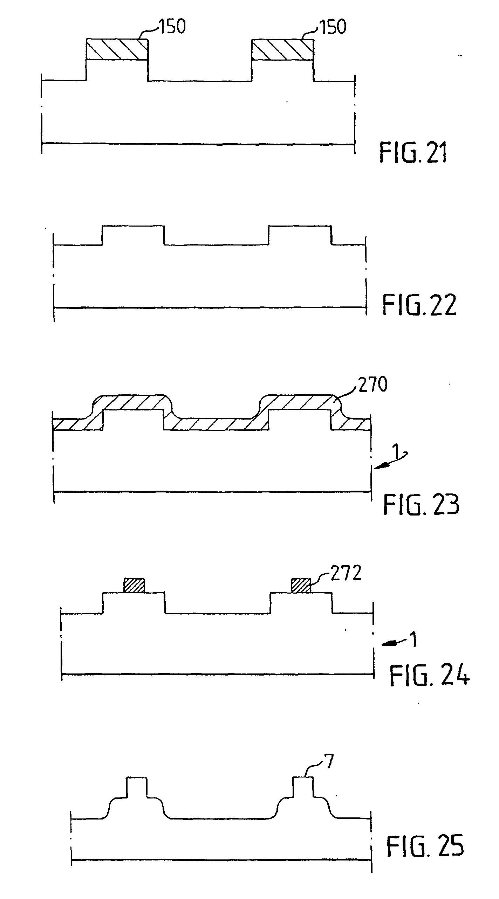

According to this embodiment of the invention the plate is, in a step S230, provided with a layer 120, sensitive to irradiation on the plate surface 105 (see Figure 18A and 19). The sensitive layer 120 is a mask film to be exposed and developed into a suitable mask pattern. The sensitive layer 120 may spin coated onto the surface 105 to a substantially even thickness. The term "sensitive layer" used in this text comprises sensitivity to electron beams as well as sensitivity to laser exposure. The sensitive layer is, in one version of the invention, a photosensitive resist film. The irradiation sensitivity of layer 120 is not limited to the above examples, but can be sensitivity to beams or rays of other irradiation such as for example X-rays or ultraviolet rays.

The sensitive layer may be sensitive in a positive manner or in a negative manner. When a positively sensitive layer is used the exposed areas are removed by a development process. Conversely, when a negatively sensitive layer is used the unexposed areas are removed by a development process.

The workpiece resulting from step S230 (see Fig. 19) has a front surface 140, an outer edge and a back surface 112, the front surface 140 being structurable, but substantially unstructured.

In a subsequent step S240 the sensitive layer 120 is exposed to provide the pattern of a guide track. After development the resulting workpiece has a protruding spiral portion of cured remains of the sensitive layer 120 forming a mask 150, as shown in Fig. 20.

The workpiece is thereafter (in step S250) subjected to ion machining, reactive ion etching, ion milling, plasma etching or the like. Such treatment is herein referred as ion etching. The process will leave land areas corresponding to the areas where the mask 150 is present and will remove material where there is no photoresist present thus giving the plate a spirally shaped guide track, as illustrated in Figs 21 and 22.

The methods named above are known methods within the art of surface-structuring and therefore no detailed discussion of these will be included here.

This ion etching process gives a depth in the etched areas corresponding to a time parameter. The process also depends on gas pressure and other technical parameters which can be determined by the man skilled in the art without any inventive activity. Thus, after determination of the technical parameters to be used ,such as e.g. gas pressure, type of gas and /or ions/plasma, voltage etc. the depth of the etched areas is dependent on the duration of the ion etching process i.e. the time parameter.

According to an embodiment of the invention the ion etching is continued until a depth d1 is reached. This depth d1 corresponds to the desired height of protrusions 7 in the stamper 5 to be achieved. This height d1 should correspond to a depth d2 of the pits of the optical disc to be produced, and the configuration of the protrusions 7 should correspond to the configuration of the individual pits-to-be-obtained. The depth d2 of the pits in an optical disc manufactured with the stamper 5 should be about a quarter of the wave length of the laser used for reading the information from the optical disc.

According to one embodiment of the invention the depth d1 is in the range 0.050 to 0.150 micrometer.

According a preferred embodiment a blank stamper is ion etched to a depth in the range 0.100 to 0.130 micrometer, but preferably less than 0.125 micrometer. Such a blank stamper is suitable for transformation into a structured stamper for production of standard CD's.

According to another embodiment a blank stamper is ion etched to a depth in the range 0.090 to 0.110 micrometer, or preferably 0.102 micrometer. Such a blank stamper is suitable for transformation into a structured stamper for production of optical video discs or DVD's.

According to yet another embodiment a blank stamper is ion etched to a depth in the range 0.062 to 0.082 micrometer, or preferably 0.072 micrometer. Such a blank stamper is suitable when the optical-disc-to-be-manufactured is to be used in a CD player having a laser working in the blue light wave length region.

The workpiece 130 is shaped and worked such that its geometry and physical properties are suitable for mounting in an injection moulding machine, as illustrated by step S220 in Fig. 18A. This step is an adaptation of the workpiece for the purpose of reducing the number of process steps to be performed by the end user of the stamper. In fact, step S220 may be performed at any stage after step S210 but before placing the semi-manufactured stamper in a package for delivery (step S270 below).

According to a preferred embodiment of step S220 the workpiece is punched so as to provide a substantially circular outer perimeter 2 and an inner circular perimeter 3 of a smaller diameter (Fig. 18A). The punching is performed such that deformation of the workpiece is avoided. Machines for performing such punching are known to the person skilled in the art. The inner diameter is preferably between 25 mm and 38 mm, and the outer diameter is preferably between 125 mm and 150 mm.

The stamper provided with a spiral track is then provided with an irradiation sensitive mask film layer 270 (step S260), which may be exposed for recording information. Fig 23 illustrates a stamper provided with a spiral track having an irradiation sensitive mask film layer 270.

According to a third embodiment a semi-manufactured stamper with a guide track is provided by electroplating. This embodiment involves coating a smooth glass plate with a photosensitive material, and thereafter curing the photoresist before radiating the surface of the coated glass plate with a modulated laser to record a spiral guide track in the photoresist material. Thereafter the master glass plate is subjected to an etching process leading to the illuminated areas being etched out such that a guide track is generated. In other words the surface of the master glass plate is made structured. After a drying process the surface of the plate is metallized, e.g. by vacuum deposition or sputtering of a thin conductive layer. The resulting multilayer construction (having a glass layer, a photoresist layer defining a guide track and a thin structured conductive layer) constitutes the master. The step of generating a semi-manufactured stamper with the use of the master involves deposition of nickel by electroplating, and removal of the resulting nickel plate from the master. This results in a blank stamper with a guide track, shown in Fig. 1, and similar to the one shown in Fig.7.

### Transporting a blank stamper

The layer 160 being sensitive to irradiation, may present the problem of enabling transport of the blank stamper 1 without damaging it.

For the purpose of preventing unwanted exposure of the layer 120 the blank stamper 1 according to Fig. 8 is placed in a protective package, as illustrated by step S80 in Fig. 2A. The package comprises walls designed to prevent external irradiation from penetrating into a stored stamper.

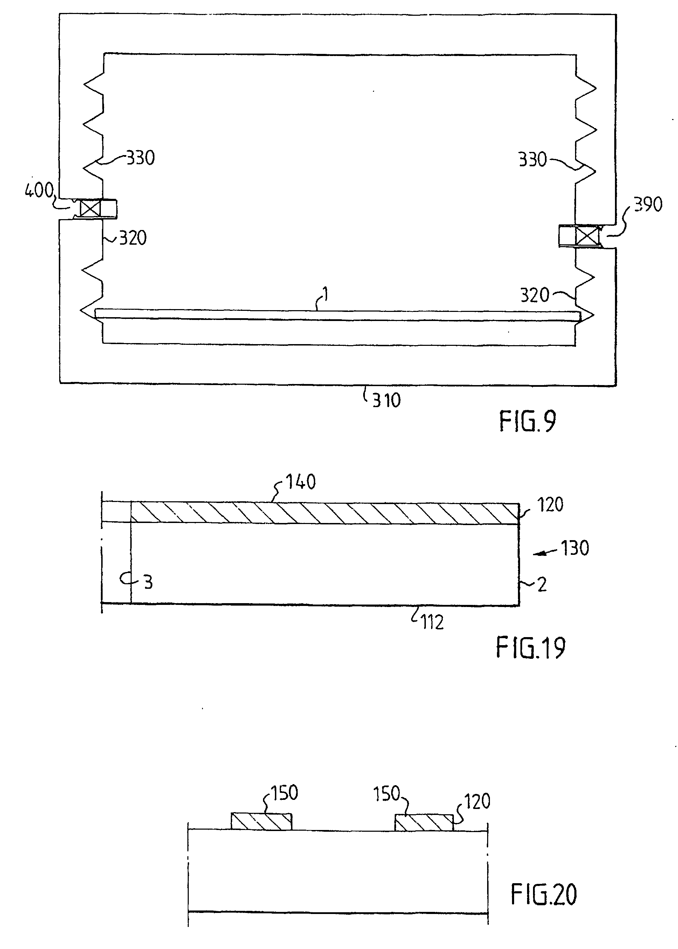

The blank stamper shown in Fig. 7 has vulnerable surfaces 105', 106' and 112, which must be protected from scratching during transport. Advantageously the blank stamper is stored in a package devised to hold a plurality of blanks 1 such that the stamper surfaces are protected from being damaged. Such a package is illustrated in Fig. 9.

Fig. 9 is a sectional top view of a package 300 for a plurality of blank stampers 1. The package comprises a housing 310 having inner walls 320. Two opposing inner walls 320 are provided at a predetermined distance from each other, and the walls are provided with shaped portions 330 for holding a blank stampers having an outer perimeter of a predetermined measure. The shaped portions are grooves adapted for allowing insertion of a blank stamper.

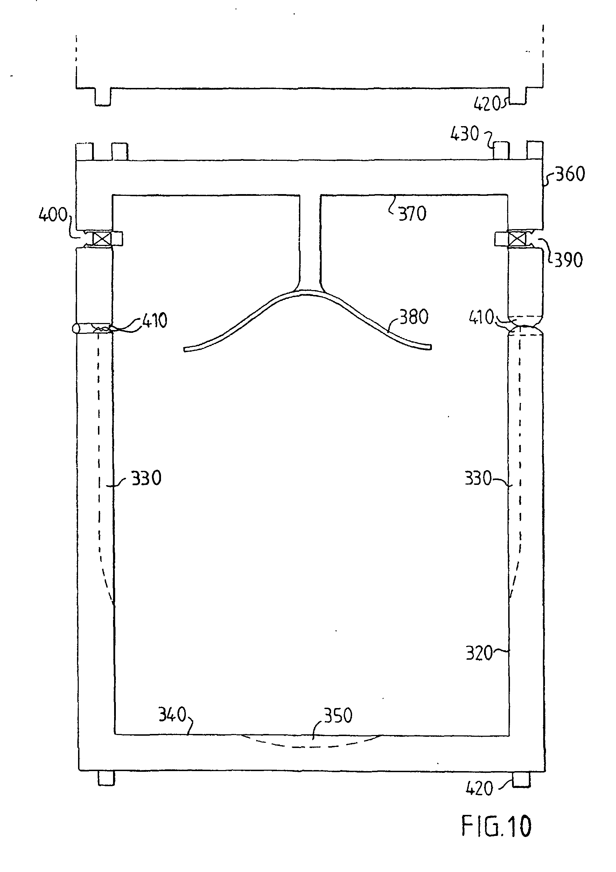

Fig. 10 is a sectional side view of the package shown in Fig. 9. The package has an inner bottom wall 340 provided with recesses 350 adapted for receiving blank stampers. An openable/closable lid 360 has an inner wall 370 having means 380 for urging a stored stamper towards a corresponding recess 350.

According to one version of the package, there is provided an inlet 390 for an anti-oxidant, such as nitrogen. For the purpose of enabling efficient filling of anti-oxidant there is also provided an outlet 400 so that a gas flow through the package can be obtained. The inlet and the outlet are provided with closable valves. The package is sealable by means of sealing means 410.

The provision of blank stampers in a package has the advantage of enabling the manufacturer of optical discs to acquire blanks which are easily transformed into structured stampers ready for use in an injection moulding machine.

### A procedure of obtaining a structured stamper

Figure 2B is a flow chart illustrating a process of obtaining a structured stamper as illustrated in Figure 1B.

The method includes the step of obtaining a blank stamper of the type shown in Fig. 8 (Step S110 in Fig. 2B). The acquisition of a blank stamper 1 may include unpacking a blank from a package.

According to a preferred embodiment of the invention step S110 involves receiving a semi-manufactured stamper 1 having a guide track and an unexposed, exposable mask film 160, as illustrated in Fig. 8.

According to another embodiment of the invention step S110 involves: firstly, receiving a semi-manufactured stamper 1 having a guide track, as illustrated in Fig. 7, and secondly, providing an exposable mask film on structurable portions of the semi-manufactured stamper 1.

According to yet another embodiment, the step S110 of obtaining a blank stamper includes all steps S10 - S70 as described above with reference to Fig. 2A.

Thereafter, in step S120, a pattern of protrusions 7 is created in the pattern layer 110, which yields the desired structured stamper 5 (see Figure 2B and 1B). Alternatively a pattern of indentations are created in the layer 110.

As illustrated in Figure 2B, the pattern creating step S120 advantageously involves only a very limited number of steps to be performed.

First, in a step S130 (Figure 2B), a pattern is created in the sensitive layer 160. This may be achieved by setting the blank 1 shown in Figures 1 and 5 in an exposure device, where a modulated laser beam is controlled to radiate parts 145 of the surface 140 of the photosensitive layer 120. In this manner a pattern of rounded and elongate surface areas are left unexposed on the workpiece 130. The pattern may include a spiral track of such exposed areas 145 on the photosensitive layer 120.

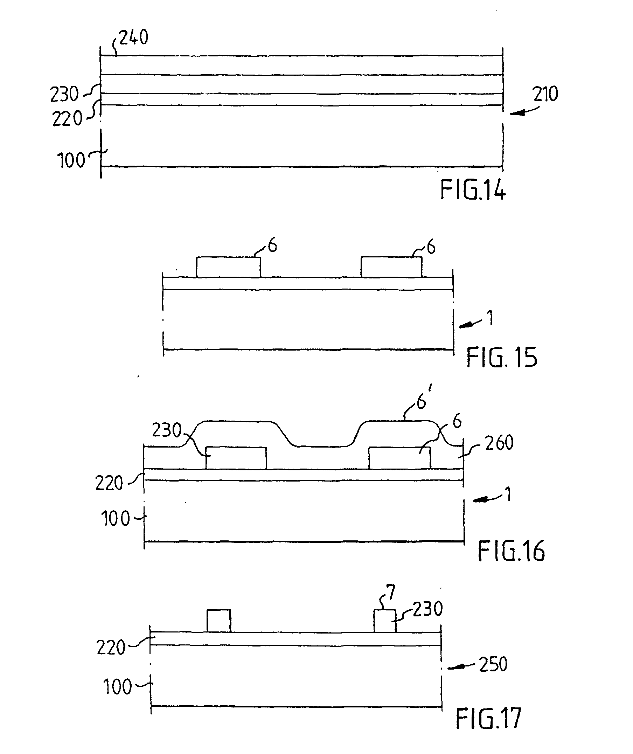

Fig. 11 shows the blank stamper 1 after exposure.

The exposure device needs to be accurately controlled to provide a densely packed amount of information on the stamper. The guide track 6' in the stamper 1 shown in Fig. 8 enables the use of a relatively uncomplicated exposure device.

Once the data pattern has been exposed onto the photosensitive layer, the blank stamper 1 is developed, i.e. the blank stamper 1 is treated such that the unexposed areas of the sensitive layer 120 are removed. This may be achieved by placing the blank stamper 1 in developing solution. As a result of the development step the guide track 6 is provided with protrusions 160, as shown in Figure 12.

In a subsequent step S140 (Figure 2B) the stamper 1 (see Figure 12) is treated in an etch process. Etching may be performed in a variety of different manners. It can for example be performed by dry etching methods or by use of a liquid etchant. It may also include ion etching, as discussed above.

When etching with use of liquid etchant the semi-manufactured stamper 1 is placed in a bath with a liquid which reacts with the material at the exposed surface parts of the guide protrusion 6.

The etching process is controlled such that the etching leaves protrusions 7 in the first layer 110 (see Figure 13).

According to one embodiment the plate 100 comprises nickel, and the first layer 110 consists substantially of titanium nitride. The etching liquid used in the etch process S60 is selected such that it acts on the first layer 110 but not on the plate 100.

In a subsequent step S150 (Figure 2B) the remaining portions of the photosensitive layer 120 is removed, yielding a stamper surface with a pattern of protrusions 7, as illustrated in Figure 1B and 13.

Since the thickness d1 of the layer 110 is predetermined by process step S20, and the plate 100 is not etchable by the etching solution, the depth of the indentations is substantially independent on the etching variables. Thus, the height h₁ of the protrusions in the stamper 5 are provided with an advantageously high accuracy, thereby enabling the production of high quality Optical Discs having a high accuracy as regards the depth of the pits (Fig. 13 and Fig. 4).

Hence, a manufacturer of optical discs having an amount of information-to-be-replicated, such as for example a music recording or computer data, can advantageously acquire a blank stamper and, using the relatively simple method illustrated in Fig. 2B, provide the desired structure thereon. The resulting structured stamper is ready to be fitted into an injection moulding machine.

### A Further Embodiment of a Blank Stamper

Figure 14 is a schematic sectional side view of a part of a stamper workpiece 210 according to a further embodiment of the invention.

The stamper workpiece 210 includes a plate 100 consisting substantially of nickel, and having a flat smooth surface on which an etch-stop layer 220 is provided. The etch-stop layer may consist essentially of gold provided as a tight skin for preventing an etch solution from reaching the plate 100 during the transformation of the stamper workpiece 210 into a blank stamper 1 with guide track, and during the transformation of the blank stamper 1 with guide track into a structured stamper.

Another layer 230 is provided on the etch-stop layer 220. The layer 230 in the blank stamper 210 corresponds to the pattern forming layer 110 in the work piece 130 shown in Figure 5.

According to a preferred embodiment, shown in Fig. 14, the disc-shaped multilayer member comprising a plate 100, and layers 220, 230 is substantially stressfree having a thickness in the range 250 to 350 micrometer, preferably 300 micrometer. The layer 230 is structurable, but substantially unstructured. A layer 240 sensitive to irradiation is provided over the layer 230.

According to one version of the work piece 210, the layer 230 consists essentially of chromium.

The workpiece 210 is worked into a blank stamper 1 with guide track essentially according to the method described above with reference to Fig. 2A. Hence a semi-manufactured stamper having a guide track 6 is obtained (Fig. 15).

According to a preferred embodiment the stamper is additionally provided with an unexposed film 260 sensitive to exposure, as illustrated in Fig. 16 (compare with the stamper described in connection with Fig. 8).

The blank stamper 210 is transformable into a structured stamper essentially according to the method shown in Fig. 2B above.

The etch step S140 is modified in that the selection of etch liquids is adapted for etching chromium. According to a preferred embodiment the etching for chromium is a mixture of Ce(SO₄)₂ X 2(NH₄)2SO₄ X 2H₂O and HClO₄ X H₂O.

Figure 17 is a sectional side view of a portion of a structured stamper 250 obtained from a blank stamper 1 as shown in Figs 15 or 16.

### A Second Embodiment of a Method of Obtaining a Structured Stamper

According to a second embodiment a structured stamper is obtained by ion machining, reactive ion etching, ion milling or plasma etching. As mentioned above, such treatment is herein referred to as ion etching.

According to the second embodiment described in connection with Fig. 18A the plate to be etched is manufactured from one material (or a laminate in order to give support to the one material) and the plate has an unexposed sensitive layer. With reference to step 250 in Fig. 18A the information pattern is obtained by ion etching.

Fig 24 illustrates the blank stamper 1 having a guide track on which an information pattern has been recorded into the mask film 270, and cured portions 272 remain on the guide track. The cured portions 272 correspond to positions on the stamper means 1 where pattern protrusions are to be provided.

Fig 25 illustrates the structured stamper having protrusions 7 obtained by ion etching.

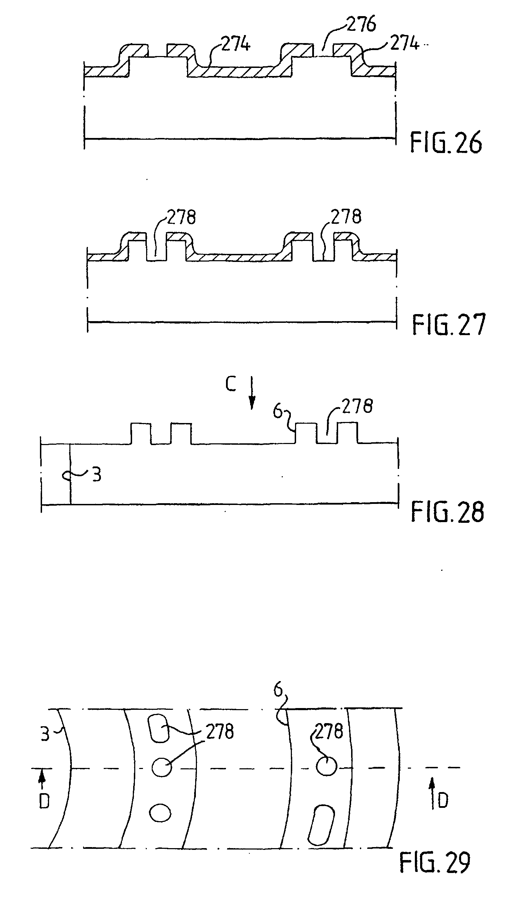

Figure 26 is a schematic sectional side view of the work piece according to Fig. 23, after exposing and curing the mask film in a second manner. In the Fig. 26 embodiment the film 270 as shown in Fig. 23 is exposed and developed so as to create a mask film 274 having openings 276 on the ridge of the guide track 6 . The openings 274 correspond to information data bits. The pattern of openings 276 are created in the sensitive layer 270 in the same manner as explained above in connection with Figure 2B, step S130.

Figure 27 is a schematic sectional side view of the work piece according to Fig. 26, after ion etching so as to achieve an information pattern in the stamper means. The ion etching/ion milling causes an indentation 278 for each opening 276 in the cured mask film 274. As explained above the depth of the indentation caused by the ion etching is controlled by the duration of the etching process, i.e. by a time parameter.

With a sufficiently long duration of the ion etching the cured mask film 274 will also be thinner after the ion etching process.

Figure 28 is a schematic sectional side view of the structured stamper according to Fig. 27, after removing any remains of the mask film.

Figure 29 is a top view of a part of the structured stamper according to Fig. 28, as seen in the direction of arrow C in Fig 28. Figure 29 is not in scale, but illustrates the general physical shape of guide tracks 6 which are protruding from the surface of the stamper. The guide tracks 6 have indentations 278 of a predetermined depth. The depth of the indentations 278 correspond to the height of protrusions-to-be on optical discs to be produced with the aid of the stamper.

## Claims

1. A method of providing a semi-manufactured stamper,
the method being **characterized by** the steps of:
a) obtaining a substantially disc-shaped member (100) having a first surface (105; 106); and a second surface (112) forming a back surface of the semi-manufactured stamper; said first surface being provided with a guide track (6; 6') for indicating structurable surface portions (106') of said member (100; 130); said structurable surface portions (106') being flat and substantially unstructured;
b) applying a layer (160; 240; 260) sensitive to irradiation on said first surface (105) such that an unexposed and exposable semi-manufactured stamper is provided;
c) enclosing (S80) the unexposed semi-manufactured stamper in a protective package such that the sensitive film is maintained substantially unexposed; and
d) treating (S30) the semi-manufactured stamper, before performing step c), said treatment including:
d1) treating said second surface (112) of the semi-manufactured stamper such that a mean surface deviation value (R_{z}) below 2 micrometer is obtained.

2. A method of providing a semi-manufactured stamper, the method being **characterized by** the steps of:
a) obtaining a substantially disc-shaped member (100) having a first surface (105; 106); and a second surface (112) forming a back surface of the semi-manufactured stamper; said first surface being provided with a guide track (6; 6') for indicating structurable surface portions (106') of said member (100; 130); said structurable surface portions (106') being flat and substantially unstructured;
b) applying a layer (160; 240; 260) sensitive to irradiation on said first surface (105) such that an unexposed and exposable semi-manufactured stamper is provided;
c) enclosing (S80) the unexposed semi-manufactured stamper in a protective package such that the sensitive film is maintained substantially unexposed; and
d) treating (S30) the semi-manufactured stamper, before performing step c), said treatment including:
d2) shaping (S30) an inner perimeter of the semi-manufactured stamper.

3. A method of providing a semi-manufactured stamper, the method being **characterized by** the steps of:
a) obtaining a substantially disc-shaped member (100) having a first surface (105; 106); and a second surface (112) forming a back surface of the semi-manufactured stamper; said first surface being provided with a guide track (6; 6') for indicating structurable surface portions (106') of said member (100; 130); said structurable surface portions (106') being flat and substantially unstructured;
b) applying a layer (160; 240; 260) sensitive to irradiation on said first surface (105) such that an unexposed and exposable semi-manufactured stamper is provided;
c) enclosing (S80) the unexposed semi-manufactured stamper in a protective package such that the sensitive film is maintained substantially unexposed; and
d) treating (S30) the semi-manufactured stamper, before performing step c), such that it geometrically fits in a mould of an injection moulding machine; said treatment including:
d2) shaping (S30) an inner perimeter of the semi-manufactured stamper; and
d3) shaping an outer perimeter of the semi-manufactured stamper such that said perimeters are substantially circular and substantially concentric.

4. The method according to claim 2 or 3, wherein said treatment includes:
d1) treating said second surface (112) of the semi-manufactured stamper such that a mean surface deviation value (R_{z}) below 2 micrometer is obtained.

5. The method according to claim 1, wherein said treatment includes:
d2) shaping (S30) an inner perimeter of the semi-manufactured stamper.

6. The method according to claim 2 or 5, wherein said treatment includes:
d3) shaping an outer perimeter of the semi-manufactured stamper such that said perimeters are substantially circular and substantially concentric.

7. The method according to claim 2, 5 or 6, wherein said inner perimeter of the semi-manufactured stamper is shaped (S30) by punching after the application of said irradiation sensitive layer (160; 240; 260).

8. The method according to claim 1, 4 or 5, wherein
said treatment includes polishing.

9. The method according to claim 1, 4, 5 or 8 wherein
said treatment includes polishing said second surface (112) so as to obtain a maximum surface deviation value (Rₘₐₓ) below 3 micrometer.

10. The method according to any of the preceding claims, wherein
said disc-shaped member (100) is made of metal.

11. The method according to any of the preceding claims, further comprising the step of providing a metal layer (110; 230) on at least a portion of the flat surface (105) of the disc-shaped member (100).

12. The method according to claim 11, wherein said sensitive layer is applied on the surface (106) of the metal layer (110; 230).

13. The method according to claim 11 or 12, wherein
the metal layer (110) comprises titanium nitride.

14. The method according to any of claims 1- 13, further comprising the steps of:
providing an etch-stop layer (220) on said surface (105) of the member (100);
providing a further layer (230) on the etch-stop layer (220), said further layer comprising a first material which is well etchable by a certain etchant; said further layer (230) providing said structurable surface portions;
the etch-stop layer comprising a material being less etchable by said etchant.

15. A process of manufacturing an optical disc replica, comprising the steps of:
receiving a semi-manufactured stamper enclosed in a package and obtained by the method according to any of claims 1 - 14;
removing said semi-manufactured stamper from said package;
mounting said semi-manufactured stamper in an information writing apparatus;
sensing a position of the guide track;
exposing the sensitive layer (160; 240; 260) so as to record an information pattern, the position of the exposed information depending on the sensed position.
structuring said first surface of said semi-manufactured stamper in accordance with the exposed pattern such that a structured stamper is obtained;
fixing said structured stamper in a mould;
injecting a resin into said mould to form a replica of said structured stamper such that the structure in said replica is a mirror image of the stamper structure;
removing said replica from said mould.

16. A kit of parts, comprising:
a semi-manufactured stamper; and
a protective package;
said semi-manufactured stamper having:
a substantially disc-shaped member (100) having a first surface (105; 106), and a second surface (112) forming a back surface of the semi-manufactured stamper; said second surface (112) having a mean surface deviation value (R_{z}) below 2 micrometer; wherein
said first surface is provided with a guide track (6; 6') for indicating structurable surface portions (106') of said member (100; 130); said structurable surface portions (106') being substantially flat and unstructured;
at least a part of said said structurable surface portions (106') is covered by a layer (160; 240; 260) sensitive to irradiation such that said member (100) constitutes an unexposed and exposable semi-manufactured
stamper; and wherein
said protective package encloses said semi-manufactured stamper such that the sensitive film is maintained substantially unexposed.

17. The kit according to claim 16, wherein
the package comprises means for preventing external irradiation from reaching an enclosed stamper means.

18. The kit according to claim 16 or 17, wherein
the package is sealable; the package, when sealed, being adapted for holding an anti-oxidant.

19. A method of obtaining a structured stamper, the method comprising the steps of:
receiving a protective package containing at least one semi-manufactured stamper, said semi-manufactured stamper having:
a substantially disc-shaped member (100) having a first surface (105; 106), and a second surface (112) forming a back surface of the semi-manufactured stamper; said second surface (112) having a mean surface deviation value (R_{z}) below 2 micrometer; wherein
said first surface is provided with a guide track (6; 6') for indicating structurable surface portions (106') of said member (100; 130); said structurable surface portions (106') being substantially flat and unstructured;
at least a part of said said structurable surface portions (106') is covered by a layer (160; 240; 260) sensitive to irradiation such that said member (100) constitutes an unexposed and exposable semi-manufachued stamper;
the method further comprising the steps of:
removing said at least one semi-manufactured stamper from said protective package;
mounting said semi-manufactured stamper in an information writing apparatus;
sensing a position of the guide track;
exposing the sensitive layer (160; 240; 260) so as to record an information pattern, the position of the exposed information depending on the sensed position.
structuring said structurable surface portions (106') of said semi-manufactured stamper in accordance with the exposed pattern such that a structured stamper is obtained.

20. The method according to claim 19, wherein said structuring step includes:
creating a pattern of indentations in the photosensitive layer;
subjecting the semi-manufactured stamper to an etch process such that a pattern of indentations is obtained in the first surface (105; 106) of the disc-shaped member (110; 230), the pattern in the first surface (105; 106; 110; 230) corresponding to the pattern in the photosensitive layer.

## Patentansprüche

1. Verfahren zum Bereitstellen eines Halbfertigstempels, **gekennzeichnet durch** folgende Schritte:
a) Erhalten eines im Wesentlichen scheibenförmigen Elements (100), das eine erste Oberfläche (105; 106) und eine eine Rückfläche des Halbfertigstempels bildende zweite Oberfläche (112) aufweist, wobei die erste Oberfläche zum Anzeigen strukturierbarer Oberflächenbereiche (106') des Elements (100; 130) mit einer Führungsspur (6; 6') versehen ist; die strukturierbaren Oberflächenbereiche (106') flach und im Wesentlichen unstrukturiert sind;
b) derartiges Aufbringen einer strahlungsempfindlichen Lage (160; 240; 260) auf die erste Oberfläche (105), dass ein unbelichteter und belichtbarer Halbfertigstempel bereitgestellt wird;
c) derartiges Einschließen (S80) des unbelichteten Halbfertigstempels in einer Schutzpackung, dass der empfindliche Film im Wesentlichen unbelichtet erhalten bleibt; und
d) Behandeln (S30) des Halbfertigstempels vor dem Ausführen des Schritts c), wobei das Behandeln umfasst:
d1) Behandeln der zweiten Oberfläche (11) des Halbfertigstempels derart, dass ein Durchschnittsoberflächenabweichungswert (R_{z}) unter 2 Mikrometer erhalten wird.

2. Verfahren zum Bereitstellen eines Halbfertigstempels, **gekennzeichnet durch** folgende Schritte:
a) Erhalten eines im Wesentlichen scheibenförmigen Elements (100), das eine erste Oberfläche (105; 106) und eine eine Rückfläche des Halbfertigstempels bildende zweite Oberfläche (112) aufweist, wobei die erste Oberfläche zum Anzeigen strukturierbarer Oberflächenbereiche (106') des Elements (100; 130) mit einer Führungsspur (6; 6') versehen ist; die strukturierbaren Oberflächenbereiche (106') flach und im Wesentlichen unstrukturiert sind;
b) derartiges Aufbringen einer strahlungsempfindlichen Lage (160; 240; 260) auf die erste Oberfläche (105), dass ein unbelichteter und belichtbarer Halbfertigstempel bereitgestellt ist;
c) derartiges Einschließen (S80) des unbelichteten Halbfertigstempels in einer Schutzpackung, dass der empfindliche Film im Wesentlichen unbelichtet erhalten wirkt; und
d) Behandeln (S30) des Halbfertigstempels vor dem Ausführen des Schritts c), wobei das Behandeln umfasst:
d2) Formen (S30) eines Innenrands des Halbfertigstempels.

3. Verfahren zum Bereitstellen eines Halbfertigstempels, **gekennzeichnet durch** folgende Schritte:
a) Erhalten eines im Wesentlichen scheibenförmigen Elements (100), das eine erste Oberfläche (105; 106) und eine eine Rückfläche des Halbfertigstempels bildende zweite Oberfläche (112) aufweist, wobei die erste Oberfläche zum Anzeigen strukturierbarer Oberflächenbereiche (106') des Elements (100; 130) mit einer Führungsspur (6; 6') versehen ist; die strukturierbaren Oberflächenbereiche (106') flach und im Wesentlichen unstrukturiert sind;
b) derartiges Aufbringen einer strahlungsempfindlichen Lage (160; 240; 260) auf die erste Oberfläche (105), dass ein unbelichteter und belichtbarer Halbfertigstempel bereitgestellt ist;
c) derartiges Einschließen (S80) des unbelichteten Halbfertigstempels in einer Schutzpackung, dass der empfindliche Film im Wesentlichen unbelichtet erhalten wirkt; und
d) derartiges Behandeln (S30) des Halbfertigstempels vor dem Ausführen von Schritt c), dass er geometrisch in eine Form einer Spritzgießmaschine passt, und das Behandeln umfasst:
d2) Formen (S30) eines Innenrands des Halbfertigstempels; und
d3) derartiges Formen eines Außenrands des Halbfertigstempels, dass die Ränder im Wesentlichen kreisförmig und im Wesentlichen konzentrisch sind.

4. Verfahren nach Anspruch 2 oder 3, **dadurch gekennzeichnet, dass** das Behandeln umfasst:
d1) Behandeln der zweiten Oberfläche (112) des Halbfertigstempels derart, dass ein Durchschnittsoberflächenabweichungswert (R_{z}) unter 2 Mikrometer erhalten wird.

5. Verfahren nach Anspruch 1, **dadurch gekennzeichnet, dass** das Behandeln umfasst:
d2) Formen (S30) eines Innenrands des Halbfertigstempels.

6. Verfahren nach Anspruch 2 oder 5, **dadurch gekennzeichnet, dass** das Behandeln umfasst:
d3) derartiges Formen eines Außenrands des Halbfertigstempels, dass die Ränder im Wesentlichen kreisförmig und im Wesentlichen konzentrisch sind.

7. Verfahren nach Anspruch 2, 5 oder 6, **dadurch gekennzeichnet, dass** der Innenrand des Halbfertigstempels nach dem Aufbringen der strahlungsempfindlichen Lage (160; 240; 260) durch Stanzen geformt (S30) wird.

8. Verfahren nach Anspruch 1, 4 oder 5, **dadurch gekennzeichnet, dass** das Behandeln Polieren umfasst.

9. Verfahren nach Anspruch l, 4, 5 oder 8, **dadurch gekennzeichnet, dass** das Behandeln das derartige Polieren der zweiten Oberfläche (112) umfasst, dass ein maximaler Oberflächenabweichungswert (Rₘₐₓ) unter 3 Mikrometer erzielt wird.

10. Verfahren nach einem der vorhergehenden Ansprüche, **dadurch gekennzeichnet, dass** das scheibenförmige Element (100) aus Metall hergestellt ist.

11. Verfahren nach einem der vorhergehenden Ansprüche, weiterhin den Schritt des Bereitstellens einer Metalllage (110; 230) auf zumindest einem Bereich der flachen Oberfläche (105) des scheibenförmigen Elements (100) umfassend.

12. Verfahren nach Anspruch 11, **dadurch gekennzeichnet, dass** die empfindliche Lage auf die Oberfläche (106) der Metalllage (110; 230) aufgebracht wird.

13. Verfahren nach Anspruch 11 oder 12, **dadurch gekennzeichnet, dass** die Metalllage (110) Titaniumnitrid umfasst.

14. Verfahren nach einem der Ansprüche 1 bis 13, weiterhin folgende Schritte umfassend:
Bereitstellen einer Ätzsperrlage (220) auf der Oberfläche (105) des Elements (100);
Bereitstellen einer weiteren Lage (230) auf der Ätzsperrlage (220), wobei die weitere Lage einen ersten Werkstoff umfasst, der durch ein bestimmtes Ätzmittel gut ätzbar ist; die weitere Lage (230) die strukturierbaren Oberflächenbereiche bereitstellt;
die Ätzsperrlage einen Werkstoff umfasst, der durch das Ätzmittel weniger ätzbar ist.

15. Verfahren zum Herstellen einer Nachbildung einer optischen Scheibe, umfassend folgende Schritte:
Empfangen eines in einer Packung eingeschlossenen und durch das Verfahren gemäß einem der Ansprüche 1 bis 14 erhaltenen Halbfertigstempels;
Entfernen des Halbfertigstempels aus der Packung;
Befestigen des Halbfertigstempels in einer Informationsschreibvorrichtung;
Erfassen einer Position der Führungsspur;
derartiges Belichten der empfindlichen Lage (160; 240; 260), dass ein Informationsmuster aufgezeichnet wird, wobei die Position der belichteten Information von der erfassten Position abhängt;
Strukturieren der ersten Oberfläche des Halbfertigstempels gemäß des belichteten Musters derart, dass ein strukturierter Stempel erhalten wird;
Befestigen des strukturieren Stempels in einer Form;
Einspritzen eines Harzes in die Form, um eine Nachbildung des strukturierten Stempels derart zu bilden, dass die Struktur in der Nachbildung ein Spiegelbild der Stempelstruktur ist;
Entfernen der Nachbildung aus der Form.

16. Einzelteilzusammenstellung, umfassend:
einen Halbfertigstempel; und
eine Schutzpackung;
bei der der Halbfertigstempel aufweist:
ein im Wesentlichen scheibenförmiges Element (100), das eine erste Oberfläche (105; 106) und eine eine Rückfläche des Halbfertigstempels bildende zweite Oberfläche (112) aufweist; wobei die zweite Oberfläche (112) einen Durchschnittsoberflächenabweichungswert (R_{z}) unter 2 Mikrometer aufweist; und
die erste Oberfläche zum Anzeigen strukturierbarer Oberflächenbereiche (106') des Elements (100; 130) mit einer Führungsspur (6; 6') versehen ist; die strukturierbaren Oberflächenbereiche (106') im Wesentlichen flach und unstrukturiert sind;
die strukturierbaren Oberflächenbereiche (106') zumindest bereichsweise von einer strahlungsempfindlichen Lage (160; 240; 260) derart bedeckt sind, dass das Element (100) einen unbelichteten und belichtbaren Halbfertigstempel bildet; und wobei
die Schutzpackung den Halbfertigstempel derart einschließt, dass der empfindliche Film im Wesentlichen unbelichtet erhalten ist.

17. Zusammenstellung nach Anspruch 16, **dadurch gekennzeichnet, dass** die Packung eine Einrichtung umfasst, um zu verhindern, dass äußere Strahlung eine eingeschlossene Stempeleinrichtung erreicht.

18. Zusammenstellung nach Anspruch 16 oder 17, **dadurch gekennzeichnet, dass** die Packung dichtbar ist; und die Packung im gedichteten Zustand zum Halten eines Antioxidationsmittels ausgebildet ist.

19. Verfahren zum Herstellen eines strukturierten Stempels, mit folgenden Schritten: Empfangen einer zumindest einen Halbfertigstempel enthaltenden Schutzpackung, wobei der Halbfertigstempel aufweist:
ein im Wesentlichen scheibenförmiges Element (100), das eine erste Oberfläche (105; 106) und eine eine Rückfläche des Halbfertigstempels bildende zweite Oberfläche (112) aufweist; wobei die zweite Oberfläche (112) einen Durchschnittsoberflächenabweichungswert (R_{z}) unter 2 Mikrometer aufweist; und
die erste Oberfläche zum Anzeigen strukturierbarer Oberflächenbereiche (106') des Elements (100; 130) mit einer Führungsspur (6; 6') versehen ist; die strukturierbaren Oberflächenbereiche (106') im Wesentlichen flach und unstrukturiert sind;
die strukturierbaren Oberflächenbereiche (106') zumindest bereichsweise von einer strahlungsempfindlichen Lage (160; 240; 260) derart bedeckt sind, dass das Element (100) einen unbelichteten und belichtbaren Halbfertigstempel bildet;
das Verfahren umfasst weiterhin folgende Schritte:
Entfernen des zumindest einen Halbfertigstempels aus der Schutzpackung;
Befestigen des Halbfertigstempels in einer Informationsschreibvorrichtung;
Erfassen einer Position der Führungsspur;
derartiges Belichten der empfindlichen Lage (160; 240; 260), dass ein Informationsmuster aufgezeichnet wird, wobei die Position der belichteten Information von der erfassten Position abhängt;
Strukturieren der strukturierbaren Oberflächenbereiche (106') des Halbfertigstempels gemäß des belichteten Musters derart, dass ein strukturierter Stempel erhalten wird.

20. Verfahren nach Anspruch 19, **dadurch gekennzeichnet, dass** der Schritt des Strukturierens umfasst:
Erzeugen eines Musters von Einbuchtungen in der fotosensitiven Lage;
Unterwerfen des Halbfertigstempels eines Atzverfahrens derart, dass in der ersten Oberfläche (105; 106) des scheibenförmigen Elements (110; 230) ein Einbuchtungsmuster erhalten wird, wobei das Muster in der ersten Oberfläche (105; 106; 110; 230) dem Muster in der fotosensitiven Lage entspricht.

## Revendications

1. Procédé de fabrication d'une matrice de pressage dégrossie, le procédé comprenant les étapes consistant à :
a) sélectionner un élément (100) sensiblement en forme de disque présentant une première surface sensiblement plate (105; 106) et une seconde surface (112) formant une surface arrière de la matrice de pressage dégrossie, ladite première surface pouvant être structurée et étant sensiblement non structurée ; **caractérisé par** les étapes consistant à :
b) appliquer une couche (160; 240; 260) réagissant au rayonnement sur ladite première surface (105) de telle sorte qu'une matrice de pressage dégrossie non exposée et pouvant être exposée est réalisée ;
c) enfermer (S50) la matrice de pressage dégrossie non exposée dans un boîtier de protection de telle sorte que le film sensible est maintenu d'une manière sensiblement non exposée ; et
d) traiter (S30) la matrice de pressage dégrossie avant l'exécution de l'étape c), ledit traitement incluant :
d1) traiter ladite seconde surface (112) de la matrice de pressage dégrossie de façon à obtenir une valeur d'écart de surface moyenne (R_{z}) inférieure à 2 micromètres.

2. Procédé de réalisation d'une matrice de pressage dégrossie, le procédé comprenant les étapes consistant à :
a) sélectionner un élément (100) sensiblement en forme de disque présentant une première surface sensiblement plate (105; 106), et une seconde surface (112) formant une surface arrière de la matrice de pressage dégrossie ; ladite première surface pouvant être structurée et étant sensiblement non structurée ; **caractérisé par** les étapes consistant à :
b) appliquer une couche (160; 240; 260) réagissant au rayonnement sur ladite première surface (105) de telle sorte qu'une matrice de pressage dégrossie non exposée et pouvant être exposée est réalisée ;
c) exposer (S50) la matrice de pressage dégrossie non exposée dans un boîtier de protection de telle sorte que le film sensible est maintenu d'une manière sensiblement non exposée ; et
d) traiter (S30) la matrice de pressage dégrossie avant l'exécution de l'étape c), ledit traitement incluant :
d2) configurer (S30) un périmètre interne de la matrice de pressage dégrossie.

3. Procédé de réalisation d'une matrice de pressage dégrossie, le procédé comprenant les étapes consistant à :
a) sélectionner un élément (100) sensiblement en forme de disque présentant une première surface sensiblement plate (105; 106), et une seconde surface (112) formant une surface arrière de la matrice de pressage dégrossie ; ladite première surface pouvant être structurée et étant sensiblement non structurée ; **caractérisé par** les étapes consistant à :
b) appliquer une couche (160; 240; 260) réagissant au rayonnement sur ladite première surface (105) de telle sorte qu'une matrice de pressage dégrossie non exposée et pouvant être exposée est réalisée ;
c) enfermer (S50) la matrice de pressage dégrossie non exposée dans un boîtier de protection de telle sorte que le film sensible est maintenu d'une manière sensiblement non exposée ; et
d) traiter (S30) la matrice de pressage dégrossie avant l'exécution de l'étape c), de telle sorte qu'elle s'insère géométriquement dans un moule d'une machine de moulage à injection ; le traitement incluant :
d2) la configuration (S30) d'un périmètre interne de la matrice de pressage dégrossie ; et
d3) la configuration d'un périmètre externe de la matrice de pressage dégrossie de telle sorte que lesdits périmètres sont sensiblement circulaires et sensiblement concentriques.

4. Procédé selon la revendication 2 ou 3, où ledit traitement comprend :
d1) le traitement de ladite seconde surface (112) de la matrice de pressage dégrossie de façon à obtenir une valeur de déviation de surface moyenne (R_{z}) inférieure à 2 micromètres.

5. Procédé selon la revendication 1, où le traitement comprend :
d2) la configuration (S30) d'un périmètre interne de la matrice de pressage dégrossie.

6. Procédé selon la revendication 2 ou 5, où ledit traitement comprend :
d3) la configuration d'un périmètre externe de la matrice de pressage dégrossie de telle sorte que lesdits périmètres sont sensiblement circulaires et sensiblement concentriques.

7. Procédé selon la revendication 2, 5 ou 6, où ledit périmètre interne de la matrice de pressage dégrossie est configuré (S30) par découpage après l'application de ladite couche réagissant au rayonnement (160; 240; 260).

8. Procédé selon la revendication 1, 4 ou 5, où ledit traitement comprend le polissage.

9. Procédé selon la revendication 1, 4, 5 ou 8 où ledit traitement comprend le polissage de ladite seconde surface (112) pour obtenir une valeur de déviation de surface maximum (Rₘₐₓ) inférieure à 3 micromètres.

10. Procédé selon l'une des revendications précédentes, où ledit élément en forme de disque (100) est réalisé en métal.

11. Procédé selon l'une des revendications précédentes, comprenant en outre l'étape consistant à réaliser une couche de métal (110; 230) sur au moins une portion de la surface plate (105) de l'élément en forme de disque (100).

12. Procédé selon la revendication 11, où ladite couche sensible est appliquée sur la surface (106) de la couche de métal (110; 230).

13. Procédé selon la revendication 11 ou 12, où la couche de métal (110) comprend du nitrure de titane.

14. Procédé selon l'une des revendications 1 à 13, comprenant en outre les étapes consistant à :
réaliser une couche d'arrêt d'attaque (220) sur ladite surface (120) de l'élément (100) ;
réaliser une autre couche (230) sur la couche d'arrêt d'attaque (220), ladite autre couche comprenant un premier matériau qui peut être bien attaqué par un certain réactif d'attaque ;
la couche d'arrêt d'attaque comprenant un matériau pouvant être moins attaqué par ledit réactif d'attaque.

15. Procédé de fabrication d'une réplique de disque optique, comprenant les étapes consistant à :
recevoir une matrice de pressage dégrossie enfermée dans un boîtier et obtenue par le procédé selon l'une des revendications 1 à 14 ; retirer ladite matrice de pressage dégrossie dudit boîtier ;
exposer la couche sensible (160; 240; 260) de manière à enregistrer un motif d'informations ; et
structurer ladite première surface en accord avec le motif enregistré de telle sorte qu'une matrice de pressage structurée est obtenue ;
fixer ladite matrice de pressage structurée dans un moule ;
injecter une résine dans ledit moule pour former une réplique de ladite matrice de pressage structurée de telle sorte que la structure dans ladite réplique est une image spéculairement identique de la structure de matrice de pressage ;
retirer ladite réplique dudit moule.

16. Ensemble de pièces, comprenant :
une matrice de pressage dégrossie ; et un boîtier de protection ;
ladite matrice de pressage dégrossie comportant :
a) un élément (100) configuré sensiblement en disque présentant une première surface (105; 106) sensiblement plate et une seconde surface (112) formant une surface arrière de la matrice de pressage dégrossie ; ladite première surface pouvant être structurée et étant sensiblement non structurée
b) au moins une partie de ladite première surface (105) est recouverte par une couche (160; 240; 260) réagissant au rayonnement de telle sorte que ledit élément (100) constitue une matrice de pressage dégrossie non exposée et pouvant être exposée ;
d1) ladite seconde surface (112) ayant une valeur de déviation de surface moyenne (R_{z}) inférieure à 2 micromètres ; et
d2) ladite matrice de pressage dégrossie présentant un périmètre interne ; où ledit boîtier de protection renferme ladite matrice de pressage dégrossie de telle sorte que ledit film sensible est maintenu d'une manière sensiblement non exposée.

17. Ensemble selon la revendication 16, où le boîtier comprend des moyens pour empêcher qu'un rayonnement externe atteigne un moyen formant matrice de pressage renfermé.

18. Ensemble selon la revendication 16 ou 17, où le boîtier peut être scellé, et le boîtier, lorsqu'il est scellé, est apte à retenir un anti-oxydant.

19. Procédé d'obtention d'une matrice de pressage structurée, le procédé comprenant les étapes consistant à :
recevoir un boîtier de protection contenant au moins une matrice de pressage dégrossie présentant :
a) un élément sensiblement en forme de disque (100) ayant une première surface (105; 106) sensiblement plate et une seconde surface (112) formant une surface arrière de ladite matrice de pressage dégrossie ; ladite première surface pouvant être structurée et étant sensiblement non structurée ;
b) au moins une partie de ladite première surface (105) est recouverte par une couche (160; 240; 260) réagissant au rayonnement de telle sorte que ledit élément (100) constitue une matrice de pressage dégrossie non exposée et pouvant être exposée ;
d1) ladite seconde surface (112) ayant une valeur de déviation de surface moyenne (R_{z}) inférieure à 2 micromètres ; et
d2) ladite matrice de pressage dégrossie ayant un périmètre interne ; le procédé comprenant en outre les étapes consistant à :
exposer la couche sensible (160; 240; 260) de manière à enregistrer un motif d'informations ; et
structurer ladite première surface en accord avec le motif enregistré de telle sorte qu'une matrice de pressage structurée est obtenue.

20. Procédé selon la revendication 19, où ladite étape de structuration comprend :
la création d'un motif d'encoches dans la couche photosensible ;
la soumission de la matrice de pressage dégrossie à un processus d'attaque de manière qu'un motif d'encoches est obtenu dans la première surface (105; 106) de l'élément en forme de disque (110; 230), le motif dans la première surface (105; 106; 110; 230) correspondant au motif dans la couche photosensible.
